(19) Europäisches Patentamt
European Patent Office
Office européen des brevets

(11) EP 1 872 652 A1

(12) EUROPEAN PATENT APPLICATION
published in accordance with Art. 153(4) EPC

(43) Date of publication:
02.01.2008 Bulletin 2008/01

(51) Int Cl.:
A01G 13/02 (2006.01)        A01G 9/14 (2006.01)
B32B 9/00 (2006.01)         C03C 17/34 (2006.01)

(21) Application number: 06728991.8

(22) Date of filing: 13.03.2006

(86) International application number:
PCT/JP2006/304926

(87) International publication number:
WO 2006/098285 (21.09.2006 Gazette 2006/38)

(84) Designated Contracting States:
AT BE BG CH CY CZ DE DK EE ES FI FR GB GR
HU IE IS IT LI LT LU LV MC NL PL PT RO SE SI
SK TR

(30) Priority: 14.03.2005  JP 2005071389

(71) Applicants:
• Nippon Sheet Glass Company Limited
  Tokyo 108-6321 (JP)
• Kagome Co., Ltd
  Aichi-ken (JP)
• KAJIMA CORPORATION
  Tokyo 107-8388 (JP)

(72) Inventors:
• KIYOHARA, Koichiro,
  Nippon Sheet Glass Co. Ltd.
  Tokyo 1086321 (JP)
• FUKUHARA, Taichi,
  Nippon Sheet Glass Co. Ltd..
  Tokyo 108-6321 (JP)

• YAMAMOTO, Toru,
  Nippon Sheet Glass Co. Ltd.   .
  Tokyo 108-6321 (JP)
• TANAKA, Hirokazu,
  Nippon Sheet Glass Co. Ltd..
  Tokyo 108-6321 (JP)
• HARADA, Satoshi,
  KAGOME CO., LTD.
  Tokyo 103-8462 (JP)
• MUKAI, Shinji,
  KAGOME CO., LTD.
  Tokyo 103-8462 (JP)
• KISHI, Ayumu,
  KAGOME CO., LTD., Research Institute
  Nasushiobara-shi, Tochigi 32 (JP)
• KINOSHITA, Tsuyoshi,
  KAJIMA CORPORATION
  Tokyo, 107-8388 (JP)

(74) Representative: Wilson Gunn
5th Floor
Blackfriars House
The Parsonage
Manchester M3 2JA (GB)

(54) GREENHOUSE, METHOD FOR GROWING PLANT BY USING GREENHOUSE, AND LIGHT-TRANSMITTING BOARD

(57)     There is provided a greenhouse wherein a light transmissive substrate that maintains or increases light transmittance at visible wavelengths and has an insulation effect is used to reduce the running costs considerably as well as increase the yield of plants. In the greenhouse according to the present invention, a light transmissive substrate that has a visible light transmittance of 86% or more and solar radiation transmittance of 78% or less is used as the material for covering the greenhouse.

FIG. 1

**Description**

FIELD OF THE INVENTION

The present invention relates to a greenhouse and a method for growing plants using the greenhouse. The present invention also relates to a light transmissive substrate used for the greenhouse.

BACKGROUND OF THE INVENTION

In general, a greenhouse refers to "a structure covered by a material which transmits sunlight" built for the purpose of cultivating plants. Such greenhouses are used as cultivation facilities which utilize sunlight (plant factories and the like), research facilities (phytotrons and the like), or facilities for agriculture, forestry, and fisheries industries, for example cultivating facilities such as seed and seedling cultivation areas.

From the past, greenhouses for plants have been utilized for the cultivation of plants. For such greenhouses for plants, considering points such as the reduction of construction costs, plastic sheet is mainly used as the material for greenhouses. However, plastic materials do not have enough durability and can easily be damaged by typhoons and the like, and its repairs are a large burden. For that reason, in recent years resin boards and glasses are being used instead of plastic sheet. Recently, greenhouses that use light transmissive materials that allow ultraviolet light transmission while lowering infrared light transmission are known (for example Japanese Patent Publication No. 2001-128566).

DISCLOSURE OF THE INVENTION

PROBLEM TO BE SOLVED BY THE INVENTION

However, there is a demerit in glass greenhouses that have been used heretofore in that the running costs are expensive. This is because in winter, air heating is needed to maintain the growing temperature of the plants being cultivated, and in summer on the other hand, there is a need for a device which lowers the temperature inside the greenhouse such as air conditioners and the like because the pollination capability of the plants being cultivated lowers, and in the case of tomato cultivation for example, there is a tendency to inhibit the activity of important enzymes by exceeding the optimum temperature for various enzymes that are related to lycopene production and the like.

Also, in the light transmitting material described in the aforementioned publication, the use of a heat-ray reflection film is required, therefore there is a need to prepare a heat-ray reflection film. Also, in order to adhere the heat-ray reflection film to the glass, the use of an adhesive material is assumed. The adhesive causes problems in the durability of the heat-ray reflection film. Also, when the temperature inside the greenhouse becomes high, the pollination ability lowers, and there is a tendency to inhibit the activity of important enzymes by exceeding the optimum temperature for various enzymes that are related to lycopene production and the like.

The object of the present invention is to provide a greenhouse having a considerably lowered running cost realized by utilizing a light transmissive substrate, as well as increasing the yield of plants by maintaining or increasing a visible light transmittance, and to provide a method for cultivating plants using this greenhouse.

Furthermore, the term "crop yield" herein represents the number of plants (fruits) that remain after defective products that are not suited for sale such as ones with partial discoloration or malformation and the like are removed from the total number of plants harvested. Also, the proportion of the "crop yield" to the " total number of plants (fruits) harvested" is referred to as "nondefective product rate".

MEANS FOR SOLVING THE PROBLEM

The inventors of the present application have made various studies for achieving the above objects, and the present invention has been accomplished by utilizing specific light transmissive substrates.

The present invention is a greenhouse covered by a material that transmits sunlight, and is characterized in that as the material, a light transmissive substrate having a visible light transmittance of 86% or more and solar radiation transmittance of 78% or less is provided.

In a preferable example of the present invention, the coefficient of heat transmission of the light transmissive substrate is $4W/m^2K$ or less.

In another preferable example of the present invention, the light transmissive substrate comprises a single pane.

In a further preferable example of the present invention, the single pane is made of a substrate, a transparent conducting film on the substrate, and a first low-refractive index film on the transparent conducting film having a lower refractive index than that of the transparent conducting film.

In a further preferable example of the present invention, a second low-refractive index film having a refractive index between the refractive indexes of the light transmissive substrate and the transparent conducting film is provided between the substrate and the transparent conducting film.

In a further preferable example of the present invention, a high-refractive index film and a third low-refractive index film in this order from the side of the substrate is provided between the substrate and the transparent conducting film, the high-refractive index film having a higher refractive index than the third low-refractive index film and the third low-refractive index film having a lower refractive index than the transparent conducting film.

In a further preferable example of the present invention, the mean surface roughness (Ra) of irregularities of the film-side outermost surface of the single pane is in the range of 5 nm-100 nm.

The method for cultivating plants according to the present invention is characterized in that it uses the greenhouse of the present invention mentioned above to cultivate plants.

In a preferable example of cultivation method of the present invention, the plants are fruit vegetables.

In another preferable example of cultivation method of the present invention, the fruit vegetables are tomatoes.

Also, the light transmissive substrate according to the present invention is characterized in that it is for a covering material of greenhouses, and it has an visible light transmittance of 86% or more, a solar radiation transmittance of 78% or less, and a coefficient of heat transmission of $4W/m^2K$ or less.

EFECTS OF THE INVENTION

Utilizing the greenhouse of the present invention and the plant cultivation method using said greenhouse, there is an advantageous effect of lowering the running costs such as the air conditioning costs inside the greenhouse and the like, as well as maintaining the crop yield in the same level as before or possibly increasing it to a higher level. Also, because of the ability to prevent damage associated with high temperature, leaf scorch and the like may be prevented, and the activity of various enzymes may be maintained, resulting in an advantageous effect of even improving the quality of fruits and vegetables.

Also, utilizing the greenhouse of the present invention and the plant cultivation method using said greenhouse, it is possible to control the temperature rise of the surfaces of plants being cultivated even in greenhouses without air conditioning, and in the case of tomato cultivation for example, damage such as partial discoloration of tomatoes and decrease in fruit-setting rates due to high temperature may be reduced, and the crop yield is improved.

Furthermore, by lowering the sensible temperature of the bumblebees used for pollination, the sustainment of the flower-visiting activity of the bumblebees is expected.

Moreover, according to the present invention, by using a substrate having irregularities on the film-side outermost surface thereof, condensed water droplets are prevented from falling on the leaves of plants and the like, and the effect of preventing diseases caused by falling water droplets is achieved.

BRIEF DESCRIPTION OF THE DRAWINGS

Fig. 1 is a cross-sectional view of an example of the light transmissive substrate.
Fig. 2 is a schematic view of an example of the apparatus according to the online CVD method.
Fig. 3 is a cross-sectional view of another example of the light transmissive substrate.
Fig. 4 is a cross-sectional view of a further example of the light transmissive substrate.
Fig. 5A is a front view of the greenhouse used in the experiment.
Fig. 5B is a top view of the greenhouse used in the experiment.

BEST MODE FOR CARRYING OUT THE INVENTION

The greenhouse of the present invention uses a light transmissive substrate with a visible light transmittance of 86% or more and a solar radiation transmittance of 78% or less. This light transmissive substrate can be used in greenhouses instead of plastic or glass parts being used existing greenhouses. By using this light transmissive substrate, it is possible to cut back considerably on the running costs due to the usage of air conditioning equipment as well as maintain the crop yield in the same level as before or increase it to a higher level.

In the following, the greenhouse of the present invention will be described mainly, and the light transmissive substrate of the present invention will be described in conjunction with the description of the greenhouse. Therefore, in the following description, the light transmissive substrate used in the greenhouse represents at the same time the light transmissive substrate of the present invention.

A visible light transmittance will now be explained. A visible light transmittance is the ratio of the transmitted light flux to the incident light of daylight entering perpendicular to the substrate surface of glass and the like. Daylight herein means CIE daylight defined by the International Commission on Illumination (CIE). CIE daylight gives a spectroscopic illuminance distribution of the daylight of the same color temperature as that of blackbody radiation in a value relative to the value at the wavelength of 560 nm. Also, light flux refers to the value obtained by integration of the product of the radiation flux of the radiation for each wavelength and the luminosity factor with the wavelength as the variable (see Japan Industrial Standards JIS Z 8113 and JIS Z 8120).

In addition, a solar radiation transmittance refers to the ratio of the transmitted radiation flux to the incident radiation flux of solar radiation entering perpendicular to the substrate surface of glass and the like. Also, solar radiation refers to direct solar radiation, in other words, radiation in the near ultraviolet, visible, and near infrared wavelengths (300-2500 nm) that reach the ground directly after transmitting through the atmosphere.

The reason for setting the lower limit of a visible light transmittance to 86% comes from the perspective of mainly using the light transmittance substrate for the greenhouse and thus promoting the preferable growth of plants. In other words, the wavelengths that the chlorophyll of plant leaves are capable of absorbing, that is to say wavelengths in the range of 400-500 nm and 600-700 nm, are most effective in photosynthesis, and wavelengths in roughly these ranges make up about 90% of effective wavelength, so that a visible light transmittance is specified from the perspective of importance of a visible light transmittance in greenhouse cultivation.

Furthermore, the upper limit of a visible light transmittance may be set case by case according to usage and is not limited, but practically, when considering the limits of current technology, is about 96% (A visible light transmittance is 96%, assuming that the reflectance of one side of glass sheet is 4% and a no-reflection condition on the other side is imposed. However, this is a theoretical value, and in reality, there will be absorption by the glass sheet and the like, and 93-94% would be a commercially practical limit.).

In addition, the upper limit of solar radiation transmittance, expecting the effect of lowering the temperature of flowers and fruits in order to avoid damage caused by high temperature, was set at 78% or lower. The lower limit of solar radiation transmittance may be set case by case according to usage, and is not limited specifically. However, in fact, since it is technically difficult to lower solar radiation transmittance while maintaining a high visible light transmittance, the lower limit of solar radiation transmittance is about 42%.

In a preferable example of the present invention, the coefficient of heat transmission of the light transmissive substrate is $4W/m^2K$ or less. Herein, a coefficient of heat transmission refers to the heat flux that flows through the center portion of a glass sheet or double-glazed unit per 1 K difference between the ambient air temperature at the outside of a glass window and the ambient air temperature at the inside thereof on an exterior wall of a building. Furthermore, the heat flux per 1 K difference between the temperature at the inside or outside surface of the glass sheet or double-glazed unit and the ambient air temperature at each side thereof is referred to as a surface heat transfer coefficient. The reason for setting the coefficient of heat transmission at $4W/m^2K$ or less comes from the perspective of improving energy conservation and lowering running costs. The heat transmission coefficient is ideally made as close to zero as possible, but in fact, there is a limit of some degree. Therefore, the lower limit of the coefficient of heat transmission is not limited specifically.

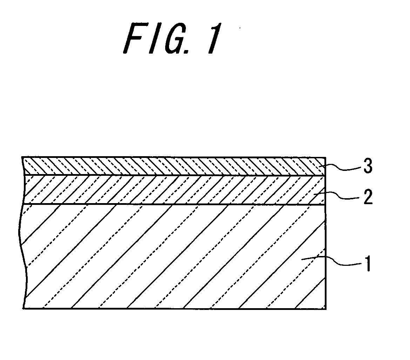

It is preferable, especially from the perspective of the simplicity of the manufacturing process, that the light transmissive substrate be a single pane. The single pane comprises, as shown in Fig.1, a substrate 1, transparent conducting film 2 on the substrate, and a first low-refractive index film 3 on the transparent conducting film having a lower refractive index than that of the transparent conducting film.

As the substrate 1, through not limited specifically, glass sheets or plastic sheets that are transparent or translucent at least in the visible light range can be given as examples. As the material for glass sheets, float glass soda lime glass, borosilicate glass, crystallized glass and the like can be used. As the material for plastic resin sheets, PET (polyethylene terephthalate), PVB (polyvinyl butyral), EVA (ethylene vinyl acetate), cellulosic resin and the like can be used. Moreover, the thickness of the substrate is not limited specifically, but in general, is in the range of 0.5-10 mm, and preferably in the range of 1-5 mm.

As the transparent conducting film 2 on the substrate 1, from the perspective of an increasing visible light transmittance, tin oxide, indium oxide, tin-indium oxide (ITO), zinc-doped indium oxide (IZO), zinc oxide and the like are used.

As the method for forming transparent conducting films, a thermal decomposition method, CVD method, sputtering method, sol-gel method and the like employed generally for the formation of thin films are used. The method for the formation of films is not limited specifically, but in order to form films having large areas inexpensively, a thermal decomposition method, a thermal CVD method in particular, is preferable. Moreover, tin oxide is more preferable because the transparent conducting film may easily be formed thereby. Herein, tin oxide generally has a rate of content of the composition of 50 mass% or more. The characteristics of thin films are more or less determined by the main component, therefore it is considered reasonable to assess the characteristics of thin films by their main components.

<Formation of tin oxide film using CVD>

As the raw material for thin films including tin oxide as its main component which is formed using a thermal decomposition method, tin tetrachloride, dimethyltin dichloride, dibutyltin dichloride, tetramethyltin, tetrabutyltin, dioctyltin dichloride, monobutyltin trichloride, dibutyltin diacetate and the like are used. As the oxidizing material which is reacted with the above raw materials to form films including tin oxide as its main component, oxygen, water vapor, or dry air can be used.

When forming tin oxide films, antimony or fluorine compounds may be added in the gas mixture flow in order to increase its conductivity. Antimony compounds used herein are antimony trichloride, antimony pentachloride and the like, and fluorine compounds used herein are hydrogen fluoride, trifluoroacetic acid, bromotrifluoromethane, chlorodifluoromethane and the like.

When antimony or fluorine is doped in tin oxide, the number of electron carriers in the tin oxide increases and the emissivity of the tin oxide decreases, therefore the coefficient of heat transmission of the film decreases and the thermal insulation efficiency is improved. The rate of content of antimony or fluorine doped in the tin oxide is not limited specifically, but is preferably about 0.01 mass% or more-1 mass% or less. In this range, the conductivity is improved effectively.

<Online CVD>

When using a thermal decomposition CVD method, the method wherein a glass ribbon in the float method is used as the substrate and a pre-processing and post-processing are carried out continuously in the float bath (hereinafter, this is referred to as "Online CVD method") makes it possible to utilize the heat of the glass ribbon, therefore a heat-treatment is not required and moreover the productivity is improved.

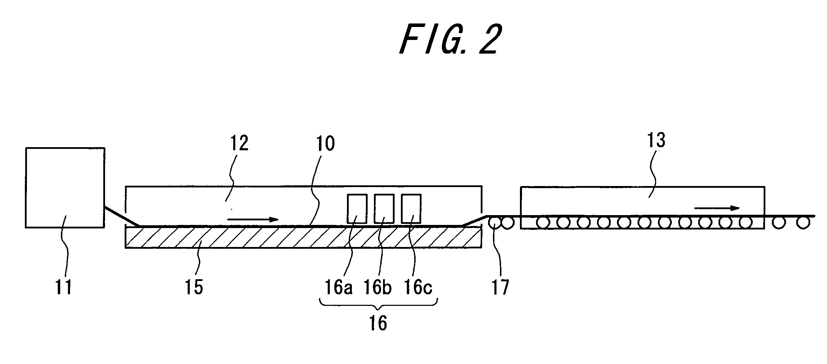

The example of the present invention using the online CVD method will now be described in more detail. In the apparatus used in the online CVD method, as shown in Fig. 2, a glass ribbon 10 flows from a melting furnace (float furnace) 11 into a float bath 12 and moves on a tin bath 15 as a ribbon, and at a specific distance away from its surface in the tin float bath are placed a specific number of coaters 16 (in the illustrated example there are three coaters 16a, 16b, and 16c). From these coaters, raw material is supplied in gas state, and the pre-processing is subjected to the glass ribbon 10 to form films thereon. Also, though not illustrated, further coaters may be used, so that a double-layer base film may be formed after the pre-processing, or a plurality of films may also be formed by supplying the raw material from multiple coaters. The glass ribbon 10 on which the film is formed is pulled out by rollers 17 and sent to an annealing furnace 13. Furthermore, the glass ribbon, after being annealed in the annealing furnace 13, is cut into glass sheets of specified size by a cutting apparatus (not shown). Moreover, in the formation process of the film, a spray method may be applied to the glass ribbon coming from the float bath 12 in combination with the CVD method in the float bath.

<The thickness of the transparent conducting film>

The transparent conducting film 2 has infrared-light reflectivity caused by electron carriers, and has the characteristic of lowering the emissivity and the coefficient of heat transmission. The thickness of the transparent conducting film is not limited specifically as long as the visible light transmittance and the coefficient of heat transmission are maintained, but when using tin oxide as the transparent conducting film, it is preferably in the range of 200-500 nm, and more preferably 250-400 nm. When the film is too thin, the coefficient of heat transmission increases and it is no preferable, and when the film is too thick, the visible light transmittance decreases and it is not preferable.

Also, the low-refractive index film (the first low-refractive index film) 3 on the transparent conducting film 2 has a lower refractive index than that of the transparent conducting film2.

<The first low-refractive index film>

The low-refractive index film (the first low-refractive index film) 3 on the transparent conducting film 2 may be of any material as long as it has a lower refractive index than that of the transparent conducting film 2, but inexpensive and easily produced silicon oxide films or magnesium fluoride films are preferable. The film formation methods include a thermal decomposition method, CVD method, sputtering method, sol-gel method and the like which are not limited specifically, but in order to form films having large areas inexpensively, a thermal decomposition method which does not require vacuum in the process, in particular a thermal CVD method or sol-gel method is preferable.

When forming silicon oxide films using a thermal CVD method, as the raw material, monosilane, disilane, trisilane, monochlorosilane, dichlorosilane, 1,2-dimethylsilane, 1,1,2-trimethyldisilane, 1,1,2,2-tetramethyldisilane, tetramethylorthosilicate, tetraethylorthosilicate and the like are used. Also, in this case, as the oxidizing material, oxygen, water vapor, dry air, carbon dioxide, carbon monoxide, nitrogen dioxide, ozone and the like are used. Furthermore, when using silane, in order to prevent the reaction of silane before it reaches the glass surface, unsaturated hydrocarbon gases such as ethylene, acethylene, and toluene may be used in combination.

<The thickness of the first low-refractive index film>

The first low-refractive index film 3, in order to have the function of increasing a visible light transmittance using the interference of light, needs to have a thickness which is adapted to this function. For example, when forming a 320 nm thick tin oxide film as the transparent conducting film, and using a silicon oxide film as the first low-refractive index film, the thickness of the silicon oxide film is preferably in the range of 50-120 nm, and more preferably in the range of 60-100 nm. The visible light transmittance is decreased if the film is too thin or too thick.

Formation of the film using a sol-gel method may be implemented using a known method (for example, Journal of the Ceramic Society of Japan, 90,328-333 (1982), Yuji YAMAMOTO, Kanichi KAMIYA, and Sumio SAKKA), and the method of coating the substrate with a solution that contains organometallic compounds or its hydrolysates is commonly used. As the coating method, known techniques may be used, but methods using apparatuses such as the spin coater, roll coater, spray coater, curtain coater and the like, methods such as the dip-coating method and the flow-coating method, the method of wetting a fabric or paper with the coating liquid, placing it on the glass surface, and rubbing it by applying a proper amount of force (rubbing method), or various printing techniques such as screen printing, gravure printing, and curved surface printing are used, which methods are not limited specifically.

Depending on the substrate, the organometallic compound coating solution may be repelled making it impossible to coat the surface uniformly, but this can be improved by cleansing the substrate surface or by surface modification of the substrate. As the method for cleansing or surface modification, a degreasing cleansing using organic solvents such as alcohol, acetone, and hexane, a cleansing using alkalis and acids, a method of polishing the surface using abrasive powder, ultrasonic cleansing, a UV irradiation treatment, a UV-ozone treatment (a UV irradiation treatment in oxygen atmosphere), and a plasma treatment are used.

Organometallic compound may be any kind of compounds as long as it is hydrolysable, condensable and polymerizable, but it is preferably a metal alkoxide or metal chelate. Specifically, as the metal alkoxide, one of methoxides, ethoxides, propoxides, butoxides and the like of silicon, aluminum, zirconium, titanium and the like, or a mixture thereof is preferably used, and as the metal chelates, acetylacetonate complexes of silicon, aluminum, zirconium, titanium or the like is preferably used.

When the method of coating is used, the solvent for dissolving the organometallic compound is not limited specifically, but when considering safety, cost, and productivity, one of water, alcohols, and ketones, or a mixture there of is preferably used. As the alcohols, methanol, ethanol, propanol, butanol or the like is used, and as the ketones, acetone, methylethylketone, diethylketone or the like is used.

Organometallic compounds are hydrolyzed as necessary. Water and acid catalyst as needed is added to the organometallic compound solution, the compound is hydrolyzed at a certain temperature for a certain period, and diluted as necessary and used for coating. The conditions for hydrolysis are not limited specifically, but it is preferably performed at 20-60˚C for a period of 3 minutes-50 hours. The progress of hydrolysis will be insufficient when the temperature is lower than 20˚C or when the period is less than 3 minutes, and there will not be much of an effect in promoting hydrolysis when the temperature is over 60˚C or when the period is longer than 50 hours, and the lifetime of the coating solution will be shortened, which is no preferable.

Mineral acids such as hydrochloric acid, sulfuric acid, nitric acid and the like, as well as organic acids including acetic acid, formic acid, citric acid, p-toluenesulfonic acid and the like are used as the acid catalyst. The amount of acid added is not limited specifically, but it is preferably in the range of 0.001-8 in molar ratio relative to the organometallic compound. The progress of hydrolysis will be insufficient when the additive acid amount is less than 0.001 in molar ratio, and there will not be much of an effect in promoting hydrolysis when there is more than 8 in molar ratio, which is not preferable because there will be an excess amount of acid.

The amount of water added for hydrolysis is not to be limited specifically, but it is preferably more that 0.1 in molar ratio relative to the organometallic compound. The progress of hydrolysis of the organometallic compound will be insufficient and not preferable when there is less than 0.1 in molar ratio of added. The concentration of the organometallic compound solution used for coating is not limited specifically, but 0.001-5 mass% solutions are used preferably. Concentration in this range is convenient for coating using the coating methods mentioned above so that the thickness will be several tens of nm.

It is preferable that the substrate after coating is dried or heat-treated at 20-250˚C for a period of 3 minutes-3 hours. More preferably, it is heat-treated at 80-200˚C for a period of 3 minutes-1 hours. With this treatment, the strength and durability of the low-refractive index film is improved. When the temperature is lower than 20˚C or when the period is less than 3 minutes, the above effect will be insufficient and therefore not preferable.
When the temperature is higher than 250˚C, there are cases where the organometallic compound will break down, which is not preferable.

Moreover, when the period is longer than 3 hours, there will not be much of an increase in the above-mentioned effect, and from the perspective of productivity, this is not preferable.

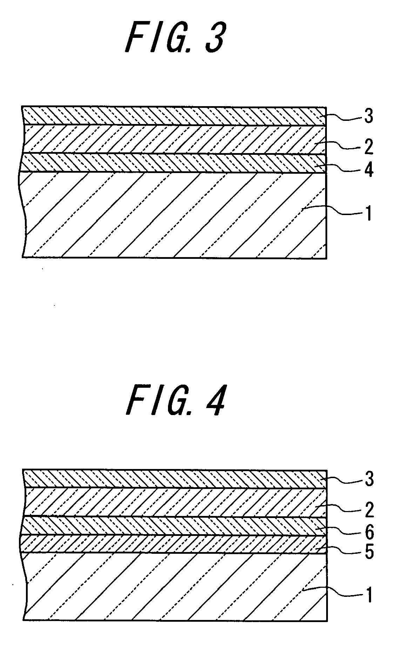

Furthermore, in the preferable example of the present invention, as shown in Fig. 3, a second low-refractive index film 4 is provided between the substrate 1 and transparent conducting film2, the film 4 having a refractive index in-between that of the substrate 1 and that of the transparent conducting film2. With this second low-refractive index film 4, the interference of light is reduced, and the transmission of light across the entire visible wavelengths is improved.

<Second low-refractive index film>

When using soda lime glass for the substrate 1, the alkali which diffuses from the substrate 1 will reduce the carrier concentration of the transparent conducting film 2 and increase the emissivity, therefore it is preferable that an alkali diffusion prevention film is formed between the substrate 1 and transparent conducting film 2. Since having a film that has a higher refractive index than that of the transparent conducting film 2 between the substrate 1 and transparent conducting film 2 decreases the visible light transmittance, the refractive index of the film placed between the substrate and the transparent conducting film needs to be lower than that of the transparent conducting film. The material used for the film is not limited specifically as long as it has a high alkali diffusion prevention capability and can be produced inexpensively and easily, but silicon oxide is used preferably. The thickness of this film is not limited specifically as long as it has the ability to prevent the diffusion of alkalis, but it is preferably 15 nm or more, and more preferably 20 nm or more. When the film is too thin, the alkali diffusion prevention function is not effective.

Moreover, if the film has a refractive index in-between that of the substrate 1 and that of the transparent conducting film 2, the color tone is approximated to an achromatic color due to the interference of light and the transmittance in the entire visible wavelengths is improved. As such a film, is used silicon oxycarbide films or silicon-tin composite oxide, for example. The thickness of the second low-refractive index film 4 is not limited specifically as long as it retains the function of approximation of the color tone to an achromatic color through the interference of light as well as preventing alkali diffusion, but from the perspective of approximation of the color tone to an achromatic color, it is preferably in the range of 50-100 nm, and more preferably 60-80 nm.

The method of forming silicon oxycarbide films or silicon-tin composite oxide is not limited specifically, but can easily be formed using the thermal CVD method. The silicon oxycarbide film is obtained by changing the material apportionment of the oxidizing source in the above-mentioned raw materials, and the silicon-tin composite oxide is obtained by mixing the raw material for silicon oxide and the raw material for tin oxide.

In the preferable example of the greenhouse of the present invention, as shown in Fig. 4, between the substrate 1 and transparent conducting film 2 of Fig. 1 there are, from the side of the substrate 1, a high-refractive index film 5 and a third low-refractive index film 6, the high-refractive index film 5 having a higher refractive index than that of the third low-refractive index film 6 and the third low-refractive index film 6 having a lower refractive index than that of the transparent conducting film 2.

The approximation of color tone to an achromatic color utilizing the interference of light is achieved by the double-layer film of the high-refractive index film 5 and the third low-refractive index film 6, improving the transmittance in the entire visible wavelength region. As the high-refractive index film 5, is used tin oxide film, titanium oxide film, silicon nitride film or the like because they are easy to form.

The film formation methods include a thermal decomposition method, CVD method, sputtering method, sol-gel method and the like which are not limited specifically, but in order to form films having large areas inexpensively, a thermal decomposition method, and especially a thermal CVD method is preferable.

Titanium tetrachloride, titanium isopropoxide or the like is used as the raw material for titanium oxide, and oxygen, water vapor, dry air or the like is used as the oxidizing material.

As the raw material for silicon nitride, monosilane ($SiH_4$), disilane ($Si_2H_6$), tetrachlorosilane ($SiCl_4$), dichlorosilane ($SiH_2Cl_2$), trichlorosilane ($SiHCl_3$), tetramethylsilane (($CH_3$)$_4$Si), silicon tetrafluoride ($SiF_4$) or the like is used for the silicon material, and ammonia and the like are used for the nitriding material.

<Thickness of the high-refractive index film>

The thickness of the high-refractive index film 5 is not limited specifically as long as it can approximate the color tone to an achromatic color and improve the transmittance in the entire visible wavelengths by forming a double-layer film with a third low-refractive index film 6, but when using tin oxide film as the high-refractive index film and silicon oxide film as the third low-refractive index film, it is preferable that the thickness of the tin oxide film is in the range of 20-30 nm and that of the silicon oxide film is in the range of 20-30 nm.

Also, in the preferable example, the mean surface roughness (Ra) of the irregularities of the film-side outermost surface is in the range of 5 nm-100 nm. This range was defined from the perspective of setting a good hydrophilicity on the inner surface of the glass and preventing as much as possible the dripping of water drops onto the plants cultivated in the greenhouse. When Ra is less than 5 nm, the effect of preventing the dripping of water drops is small and not preferable, and when it is larger than 100 nm, the transparency is lost causing the visible light transmittance decrease which is not preferable. The material of the outermost film having irregularities is not limited as long as it shows hydrophilicity, but silicon oxide is especially preferable because the surface does not get dirty easily and hydrophilicity is maintained for a long period, sustaining the effect of preventing the dripping of water drops.

Here, the arithmetic mean roughness (Ra) defined in Japan Industrial Standard JIS B0601 (1994) is used as means for showing mean surface roughness (Ra). The value of the arithmetic mean roughness is expressed as "the absolute value of the deviation from the average line" and is given by the following equation.

## Equation 1

$$Ra = \frac{1}{L} \int_0^L |f(x)| dx$$

wherein L: standard length

In the present invention, the methods for forming irregularities on the film-side outermost surface are, for example, (1) a method of utilizing the crystal grain boundaries formed during the formation of the transparent conducting film 2, (2) a method of forming irregularities, when coating with the first low-refractive index film 3, by coating the base material with a coating solution consisting of metal oxide colloids or metal oxide fine particles and hydrolysable, condensable, and polymerizable organometallic compound or chlorosilyl group-containing compound.

As for the method of utilizing the crystal grain boundaries, for example, when forming a tin oxide film as the transparent conducting film using gas-phase methods such as a CVD method, crystal particles grow along with the growth of the film and irregularities are formed on the surface. By forming the first low-refractive index film 3 on top of the transparent conducting film at a thickness which will not cancel out the irregularities that have been formed, a light transmissive substrate which has a mean surface roughness (Ra) of 5 nm-100 nm on the film-side outermost surface can be formed.

As for the method of utilizing metal oxide colloids or metal oxide fine particles, metal oxide colloids or metal oxide fine particles comprising one component selected from the group consisting of silicon oxide (silica), aluminum oxide (alumina), zirconium oxide (zirconia), titanium oxide (titania), cerium oxide (ceria), a mixture thereof, or composite material oxide colloids or material oxide fine particles comprising two or more components selected from said group is used. These are preferably used in a solvent-dispersed sol form. As the metal oxide sol, water dispersion sols such as silica sols Snowtex-OL, Snowtex-O, Snowtex-OUP, Snowtex-UP commercially available from Nissan Chemical Industry, Ltd. alumina sol 520 or zirconia sol NZS-30A from said Industry, titania sol STS-01 or STS-02 from Ishihara Industry Co., Ltd. Needlal U-15 (ceria sol) or M-6 (titania sol) from Taki Chemical Co., Ltd. as well as organic solvent dispersion sols such as IPA-ST or XBA-ST from Nissan Chemical Industry, Ltd., or water-alcohol mixed solvent dispersion titania sols containing a binder such as ST-K01 or ST-K03 from Ishihara Industry Co., Ltd is used for example.

The size of the metal oxide colloids or metal oxide fine particles is preferably 6-500 nm in grain diameter. When the grain diameter is less than 6 nm, the mean surface roughness (Ra) tends to be less than 5 nm, and cannot form the irregularities effective for causing hydrophilicity. When the grain diameter exceeds 500 nm, the arithmetic mean roughness (Ra) exceeds 100 nm, and the irregularities will become so large that the transparency is lost, and sedimentation of the colloids and fine particles tend to occur easily which is not preferable.

As the metal oxide colloids or metal oxide fine particles, chained colloids or chained fine particles are preferable. By using chained colloids or chained fine particles, the surface irregularities take a three-dimensionally intricate figure, and the surface irregularities with high hydrophilicity and hydrophilicity sustainability is formed. Silica sols Snowtex-OUP and Snowtex-UP commercially available from Nissan Chemical Industry, Ltd., having the size of 10-20 nm in diameter and 40-300 nm in length, are given as examples of chain colloids.

The solvent of the colloids or fine particles is not limited specifically as long as the colloid particles or fine particles are virtually dispersed stably, but one of water, methanol, ethanol, propanol and the like or a mixture thereof is preferable, and water is more preferable. These water and lower alcohols are easily mixed together with solutions containing an organometallic compound, and also can easily be removed by heat-treatment after film formation, and therefore preferable. Water is most preferable thereamong considering the production environment.

When adding colloids and fine particles to solutions including an organometallic compound or a chlorosilyl group-including compound, a dispersion agent may be added. The dispersion agent is not limited specifically, and generally additives such as electrolytes including sodium phosphate, sodium hexametaphosphate, potassium pyrophosphate, aluminum chloride, iron chloride or the like, various surfactants, various organic polymers, silane coupling agent, titanium coupling agent or the like are used, the added amount usually being 0.01-5 mass% relative to the colloid or fine particle.

The hydrolysable, condensation polymerizable organometallic compound included in the irregularities surface formation coating solutions along with the metal oxide colloids or metal oxide fine particles may be any kind of compound as long as it is hydrolysable and condensation, and polymerizable, but metal alkoxides or metal chelates are preferable.

As the metal alkoxide specifically, one of methoxide, ethoxide, propoxide, butoxide and the like of silicon, aluminum, zirconium, titanium and the like, or a mixture thereof is preferably used, and as the metal chelate, acetylacetonate complex of silicon, aluminum, zirconium, titanium or the like is preferably used.

Also, as the organometallic compound, high-molecular weight type alkylsilicates, for example Ethylsilicate 40 commercially available from Colcoat Co., Ltd., and MS56 from Mitsubishi Chemical Corporation may be used. As the organometallic compound hydrolysate, alkoxysilane hydrolysate solutions, for example HAS-10 commercially available from Colcoat Co., Ltd., Ceramica G-91, G-92-6 form Nippon Laboratry, Atoron NSI-500 from Nippon Soda Co., Ltd. and the like may be used.

The chlorosilyl group-containing compound which is included in the coating solution with metal oxide colloids or metal oxide fine particles is a compound which contains at least one chlorosilyl group ($-SiCl_nX_{3-n}$, wherein n is 1, 2, or 3 and X is hydrogen or a alkyl group, alkoxy group or acyloxy group each having a carbon number of 1-10), and among others, compounds having at least two chlorine atoms is preferable, and chlorosilane wherein at least two hydrogen atoms of silane $Si_nH_{2n+2}$ (wherein n is an integer of 1-5) are substituted by chlorine and other hydrogen atoms are substituted as necessary by alkyl group, alkoxy group, or acyloxy group as well as its partial hydrolysates and condensation polymers are preferable, for example tetrachlorosilane ($SiCl_4$), trichlorosilane ($SiHCl_3$), trichloromonomethylsilane ($SiCH_3Cl_3$), dichlorosilane ($SiH_2Cl_2$), $Cl-(SiCl_2O)n-SiCl_3$ (n is an integer of 1-10) or the like may be used, and one of these compounds or a mixture of two or more thereof may be used, but the most preferable chlorosilyl group-including compound is tetrachlorosilane. The chlorosilyl group is very reactive, and forms a dense film through self-condensation or condensation reaction with the substrate surface.

The solvent of the solution containing an organometallic compound or chlorosilyl group-including compound or hydrolysates thereof may be any kind of material as long as it virtually dissolves the organometallic compound or chlorosilyl group-containing compound or hydrolysates thereof, but alcohols such as methanol, ethanol, propanol, butanol and the like are most preferable, and an organometallic compound or chlorosilyl group-containing compound or hydrolysates thereof are contained in the concentration of 1-30 mass%.

Water is needed for the hydrolysis of the organometallic compound. This may be acidic or neutral, but in order to accelerate hydrolysis, water made acidic by hydrochloric acid, nitric acid, sulfuric acid, acetic acid, citric acid, sulfonic acid or the like is used preferably. The amount of added acid is not limited specifically, but it is preferably in the range of 0.001-8 in molar ratio relative to the organometallic compound. When the added acid is less than 0.001 in molar ratio, the promotion of the hydrolysis of the organometallic compound is insufficient, and when more than 8 in molar ratio, there will not be much of an effect in promoting hydrolysis, and the hydrophilicity of the formed film is not very good, which is not preferable.

The amount of added water needed for the hydrolysis of the organometallic compound is preferably 0.1-100 in molar ratio relative to the organometallic compound. When the amount of added water is less than 0.1 in molar ratio, the progress of hydrolysis is insufficient, and when it is more than 100 in molar ratio, the stability of the liquid tends to decrease, which is not preferable.

When using a chlorosilyl group-containing compound, the addition of water or acid is not always necessary. Without adding any additional water or acid, hydrolysis progresses by water that is contained in the solvent or water in the atmosphere. Furthermore, hydrochloric acid is released as hydrolysis goes on and additionally promotes hydrolysis. However, there is no problem in adding additional water or acid. As the acid, hydrochloric acid, nitric acid, sulfuric acid, acetic acid, citric acid, sulfonic acid or the like is used, and the amount of added acid is not limited specifically, but is preferably 0-4 in molar ratio relative to the chlorosilyl group-including compound. When the added acid is more than 4 in molar ratio, there isn't much of an improvement in the effect of hydrolysis promotion, and the hydrophilicity of the formed irregularities film is not favorable, which is not preferable. Also, the amount of added water is preferably 0-100 in molar ratio relative to the chlorosilyl group-including compound. When the amount of added water is more than 100 in molar ratio, the stability of the liquid tends to decrease, which is not preferable.

When the amount of the colloids or fine particles in the film is too small, the effect of adding the colloids or fine particles, in other words the obtained hydrophilicity, is insufficient and not preferable, and when the amount of the colloids or fine particles in the film is too large, the metal oxide matrix phase originating from the organometallic comopound or chlorosilyl group-containing compound will be discontinuous and the resultant irregular film will be fragile, the strength of the film is more likely to decrease, and the obtained defogging ability and defogging sustainment ability will be saturated and there will be virtually no improvement. Therefore, the amount of colloids or fine particles in the film converted as metal oxide is preferably 5 mass% or more and 80 mass% or less in metal oxide equivalent, and more preferably 10 mass% or more and 70 mass% or less, and even more preferably 20 mass% or more and 60 mass% or less.

A coating solution for forming irregularities on the substrate is prepared by mixing a metal oxide colloid or metal oxide fine particles and an organometallic compound, chlorosilyl group-containing compound or hydrolysates thereof. The preferable materials ratio of this coating solution is given in the following.

| organometallic compound or chlorosilyl group-containig compound or hydrolysates thereof | 100 part by mass |
|---|---|
| metal oxide colloid or metal oxide fine particle | 10-200 part by mass |
| water | 0-150 part by mass |
| acid catalyst | 0-5 part by mass |
| dispersion agent | 0.001-10 part by mass |
| solvent | 500-10000 part by mass |

A metal oxide compound or chlorosilyl group-containg compound is dissolved in the solvent, the catalyst and water is added, and it is hydrolyzed for a period of 5 minutes to 2 days at a certain temperature between 10 ˚C and the boiling point of the solution. Into the solution is added a metal oxide colloid or metal oxide fine particles and dispersion agent as necessary, and it is further reacted as necessary for a period of 5 minutes to 2 days at a certain temperature between 10 ˚C and the boiling point of the solution to obtain the coating solution. Alternatively, the metal oxide colloid or metal oxide fine particles may be added before the hydrolysis process. Furthermore, in order to omit the hydrolysis process of the organometallic compound, the abovementioned commercially available organometallic compound hydrolysate solutions may be used. The obtained coating solution may be diluted by appropriate solvents according to the coating method.

The irregularities formation coating solution is coated on the substrate, dried, and heat-treated to form metal oxide irregularities on the substrate. As the coating method known, techniques may be used, but methods using apparatuses such as the spin coater, roll coater, spray coater, curtain coater and the like, methods such as the dip-coating method and the flow-coating method, or various printing techniques such as screen printing, gravure printing, and curved surface printing are used, which are not limited specifically.

The coated substrate is dried at a temperature between room temperature and 150 ˚C for a period of 1 minute to 2 hours, and then heat-treated as necessary at a temperature between 150 ˚C and the upper temperature limit of the substrate for a period of 5 seconds to 5 hours. The upper temperature limit of the substrate is the upper temperature limit at which the characteristics of the substrate are practically maintained, and is for example the softening point or devitrification point for glass substrates, and glass transition point, crystallization temperature, or decomposition point for plastic substrates. Through drying and/or heat-treatment, a robust metal oxide irregular film is formed on the substrate surface. This irregular film is made of metal oxide fine particles (originating from metal oxide colloids as well) and matrix of metal oxide (originating from organometallic compound or chlorosilyl group-containing compound), and the metal oxide fine particles are bound to the substrate through the metal oxide matrix, the surface shape of the metal oxide fine particles forming the irregularities of this film.

The light transmissive substrate having a metal oxide irregular film obtained like this has an improved wettability by water, a lower contact angle of water, and hydrophilicity, and the contact angle does not increase easily even with surface stains to some extent, and hydrophilicity is sustained. It is preferable that the irregular film of the present invention is made to have a mean surface roughness (Ra) of 5-100 nm by adjusting the grain size or grain shape of the metal oxide colloid or metal oxide fine particles, the content ratio of the organometallic compound or chlorosilyl group-containing compound or hydrolysates thereof and metal oxide colloid or metal oxide fine particles, the solid content concentration and the like of the coating solution. When the Ra value is smaller than 5 nm or when it is greater than 100 nm, hydrophilicity and hydrophicity sustainability is low, which is not preferable. Specifically, when the Ra value is greater than 100 nm, the transparency is lost, which is not preferable. The irregular film of the present invention has, more preferably, an arithmetic mean roughness (Ra) of 10-30 nm. In this range, hydrophilicity, and especially hydrophilicity sustainability, is even better. Herein, the Ra value may be calculated from the profile curve observed and measured by an atomic force microscope (for example SPI3700 produced by Seiko Electronics Co., Ltd.) or electron microscope (for example H-600 produced by Hitachi, Ltd.).

By further including a surfactant in the first low-refractive index film having irregularities, a light transmissive substrate with even better hydrophilicity and hydrophilicity sustainability may be obtained. As the method for containing a surfactant in the film, the method of adding the surfactant in the coating solution is simple and preferable. The surfactant included in the film slowly travels to the surface, lowers the surface tension of the condensed water droplets and spreads the droplets on the surface, and has the effect of further increasing hydrophilicity. It also has the effect of wrapping up stain elements and prevents the loss of defogging ability due to surface stains.

The surfactant included in the film is contained in the space formed by metal oxide colloids or metal oxide fine particles or in pores of the metal oxide matrix, slowly travels to the surface and contributes to the defogging ability and hydrophilicity, improving hydrophilicity sustainability compared to irregular films without a surfactant. Furthermore, even when there are no more surfactants that can slowly travel from the inside to the surface of the film due to continued usage and outflow of the surfactants, high defogging ability is sustained because of the irregularities, so there is no sudden drop in hydrophilicity.

As the surfactants, anionic surfactants are preferably used. Cationic or ampholytic surfactants tend to adsorb directing the cation part to the irregular film made of metal oxide, therefore the hydrophobic part of the surfactant is directed at the atmosphere, and in result the hydrophilicity of the surface is likely to drop, which is not preferable. Most nonionic surfactants have large molecular weight, and have a tendency to be trapped inside the film causing the surface hydrophilicity to drop as expected, which is not preferable.

Also, surfactants having amine nitrogen or amide bond in the molecule, regardless of ionicity, have a powerful tendency to adsorb mediated by nitrogen to the irregular film made of metal oxide, and the hydrophilicity decreases as expected, which is not preferable. Therefore, surfactants without any amine nitrogen or amide bond in the molecule are preferably used.

As the anionic surfactant, sulfosuccinates such as dialkyl sodium sulfosuccinate; alkylether sulfates; alkylether phosphates; alkylether carboxylates; sulfates such as sodium dodecylbenzene sulfate may be given as examples, and among others, dialkyl sodium sulfoccinate, for example dibutyl sodium sulfoccinate, dihexyl sodium sulfoccinate, di-2-ethylhexyl sodium sulfoccinate and the like have good hydrophilicity and hydrophilicity sustainability and are used preferably. One of these surfactants or a mixture of two or more thereof may be used.

The amount of surfactant included in the film is preferably 0.1-15 mass%. When the added amount is less than 0.1 mass%, the improvement of hydrophilicity is insufficient and there will be no point in the addition, which is not preferable. On the other hand, when the added amount is greater than 15 mass%, the film is likely to be whitened resulting in poor appearance and also the film strength decreases, which of course, is not preferable. The irregular film with added surfactant is dried and/or heat-treated after film formation at a temperature below the decomposition temperature of the surfactant.

By further including a phosphorus compound in the irregular film or irregular film including a surfactant of the present invention, an article with even better hydrophilicity and hydrophilicity sustainability is obtained. As the method for including a phosphorus compound in the irregular film, adding the phosphorus compound in the irregulars formation coating solution is simple and preferable. As the phosphorus compound, ester phosphate, phosphoric acid, phosphorus oxide, ester phosphite, phosphorous acid or the like may be given as examples, and one of these compounds or a mixture of two or more thereof may be used.

The amount of added phosphorus compound is preferably 0.1-15 mass%. When the added amount is less than 0.1 mass%, the improvement of hydrophilicity is insufficient and there will be no point in the addition, which is not preferable. On the other hand, when the added amount is more than 15 mass%, the film is likely to be whitened resulting in poor appearance and also the film strength decreases, which of course is not preferable.

The type of greenhouse is, according to the shape of the roof and its structure, categorized into lean-to type, even-span type, and three-quarter type, and there are also single-ridge type and multiple-ridge type. The setup of the greenhouse of the present invention is not limited specifically as long as the light transmissive substrate is used. According to the type of plant cultivated, the light transmissive substrate may be used at all sides of the greenhouse or single sides thereof (for example the lateral side, top side, south side, and the like). This is because the desired effect is achieved whether it is used in all sides or single sides thereof. That is, as long as the light transmissive substrate is used, in the greenhouse of the present invention, the layout may be changed freely according to the type of plant or the region where the greenhouse is placed.

Furthermore, the light transmissive substrate of the present invention may be used not only for the covering material of greenhouses, but also for example by using it for the daylighting window of the atrium (a large stairwell space at the foot of high-rise buildings having a glassed-in top), contributions to the greening inside the atrium (indoor garden and the like) may be expected.

Next, the cultivation method of plants is explained. The method for cultivating plants of the present invention utilizes the greenhouse of the present invention to cultivate plants. As for "the greenhouse of the present invention", the above description may be applicable to as it is. As the plant, fruit vegetables may be given as examples, but for example, the tomato, bell pepper (paprika), cucumber, zucchini, eggplant, chili pepper and the like which are not limited may be given. For example, when fruits and vegetables are summed up in a table, Table 1 is given.

Table 1

| solanaceae | cucurbitaceae | malvaceae | others |
|---|---|---|---|
| eggplant<br>tomato<br>bell pepper<br>chili pepper | cucumber<br>pumpkin<br>gourd<br>balsam pear<br>zucchini<br>winter melon<br>loofah<br>bottle gourd<br>chayote<br>melon<br>water melon | okra | water caltrop<br>tonburi |

The benefits of the present invention is explained in the following from the perspective of the photosynthesis saturation,the relation of wavelength of light and photosynthesis, damage associated with high temperature, and the like in tomato as the most general example of a plant cultivated in greenhouses.

<Photosynthesis saturation>

Tomato's photosynthesis is known to saturate at about 70,000 Lux (70,000 Lux corresponds to about 700 $W/m^2$). Tomato is categorized as a plant that prefers strong light. As for the light intensity, summer outdoor maximum is about 1200 $W/m^2$, and the winter outdoor maximum is about 600 $W/m^2$. Moreover, after transmission through glass, the summer maximum is about 1000 $W/m^2$ and the winter maximum is about 500 $W/m^2$, therefore even at the top of the plant body, only the time of year in the neighborhood of summer provides light intensity enough for photosynthesis saturation, and there is a substantial period around winter when it is not saturated. Therefore, the transmittance of the light transmissive substrate is shown to have a large influence on the amount of photosynthesis. The greenhouse of the present invention specifies the transmittance of such light transmissive substrates also from the perspective of plant cultivation, which is suitable.

<The wavelength of light and photosynthesis>

The wavelengths ranges where chlorophyll in the leaves can absorb light, the wavelengths in the range of 400-500 nm and 600-700 nm, are most effective for photosynthesis, and light in these wavelengths occupies about 90 % of light in the effective wavelengths. From theses facts, the transmittance in these wavelengths is important, and the greenhouse of the present invention is suitable also from this perspective.

<Damage associated with high temperature>

The fertility (pollination ability) of pollens begins to be low when the temperature exceeds 30 ˚C, and becomes mostly impotent at 35 ˚C. Many enzymes are involved in the production of lycopene in fruits, and out of the enzymes partipating in the main reaction, the optimum temperature for Psy (phytoene syntase) is 20 ˚C and the optimum temperature for Lyc (lycopene cyclase) is 30 ˚C, and unless there are at least some periods in the day in both temperature ranges, lycopene production is inhibited. When the night temperature doesn't drop, or when the afternoon temperature is too high, inhibition is more likely to occur. Therefore, by lowering the transmission of the heat rays through glass, effects of lowering the flower temperature, lowering the fruit temperature and the like may be expected and the risk of damage is decreased, and the greenhouse of the present invention specifies a solar radiation transmittance and is suitable also because the above effects are expected.

EXAMPLES

In the following, the present invention will be explained more concretely using examples, but the present invention is not limited thereto.

Example 1

Utilizing an online CVD method, a high-refractive index film, third low-refractive index film, transparent conducting film, and first low-refractive index film were formed on the glass ribbon in this order. Specifically, 98 volume% of nitrogen and 2 volume% of oxygen were introduced into the float bath space, maintaining a slightly higher pressure inside the float bath compared to the outside. While maintaining a non-oxidizing atmosphere inside the float bath, a gas mixture of dimethyltin dichloride (vapor), oxygen, water vapor, nitrogen, and helium was introduced from the first coater located at the uppermost part of the line to form a high-refractive index film made of 25 nm-thick tin oxide on the glass ribbon. Next, a gas mixture of monosilane, ethylene, oxygen, and nitrogen was introduced from the second coater to form the third low-refractive index film made of 25 nm-thick silicon oxide on the high-refractive index film. Then, a gas mixture of dimethyltin dichloride (vapor), oxygen, water vapor, nitrogen, and hydrogen fluoride was introduced from the third coater to form the transparent conducting film made of fluorine-doped tin oxide with a thickness of about 320 nm containing 0.3 mass% of fluorine. After that, a gas mixture of monosilane, ethylene, oxygen, and nitrogen was introduced from the fourth coater to form the first low-refractive index film made of 100 nm-thick silicon oxide on the transparent conducting film. In this way, the 25 nm-thick tin oxide film, 25 nm-thick silicon oxide film, 320 nm-thick fluorine-doped tin oxide film, and 100 nm-thick silicon oxide film were formed in this order on the 4 mm-thick float glass substrate. As a result, the glass with an visible light transmittance of 89%, a solar radiation transmittance of 77%, and a coefficient of heat transmission of 3.9 was obtained.

As comparison examples, the glass substrate by itself (4 mm thick; a comparison example 1) and the glass composed in the same way as example 1 but without the first low-refractive index film (a comparison example 2) were prepared. The film composition is shown in Table 2, and the visible light transmittances (%), solar radiation transmittances (%), and coefficients of heat transmission (W/m$^2$K) of the light transmissive substrates are shown in Table 3.

Table 2

| | Film Composition |
|---|---|
| Exampe 1 | G/SnO$_2$ (25 nm)/SiO$_2$ (25 nm)/SnO$_2$:F (320 nm)/SiO$_2$ (100nm) |
| Comparison Example 1 | G |
| Comparison Example 2 | G/SnO$_2$ (25 nm)/SiO$_2$ (25 nm)/SnO$_2$:F (320 nm) |

In the table, G represents glass, and SnO$_2$:F represents fluorine-doped tin oxide.

Table 3

| | Visible Light Transmittance (%) | Solar Radiation Transmittance (%) | Coefficient of Heat Transmission (W/m$^2$K) |
|---|---|---|---|
| Example 1 | 89 | 77 | 3.9 |
| Comparison Example | 89 | 85 | 5.9 |
| Comparison Example | 83 | 75 | 3.9 |

Each light transmissive substrate was used as the material for the greenhouse and a cultivation test was carried out. The details of the test are given in the following.

Place of experiment: Kagome Research Institute, Large-scale greenhouse Cultivation room No. 1 (a fenlow-type greenhouse)
Cultivation method: Nutrient solution culture using rock wool as the culture medium
Testing method: Tomatoes were seeded in December 2003, and continually harvested since March 2004.

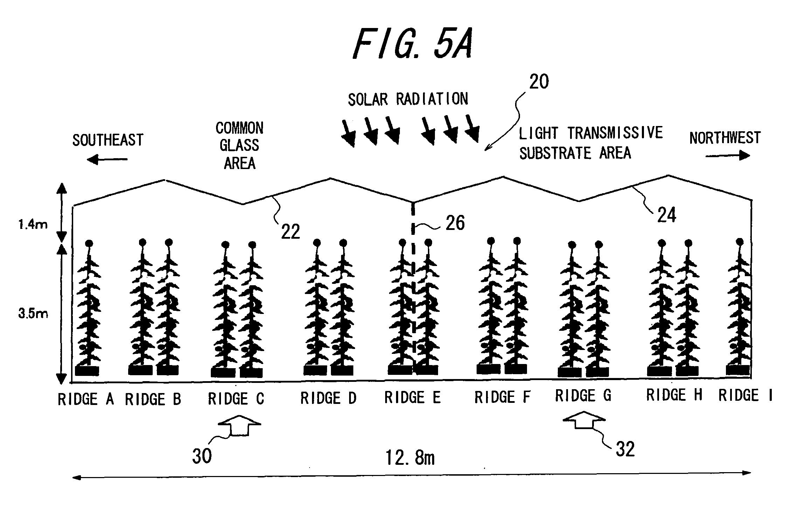

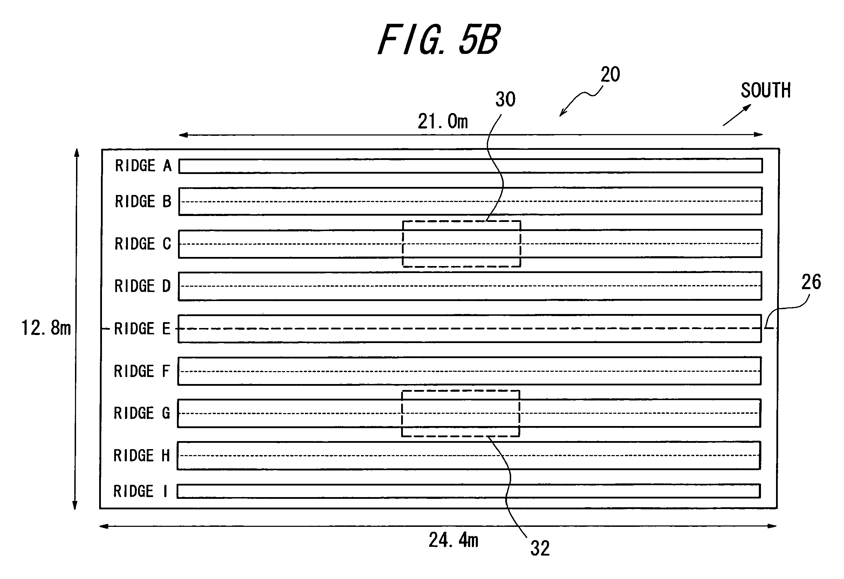

Figs. 5A and 5B are a front view and top view of the structure of the large-scale greenhouse 20 used for the cultivation test. As for the dimensions of this greenhouse, the floor dimension is 12.8 m X 24.4 m, and the height is 4.9 m.
Half of the roof glass of the cultivation room is "common glass 22 (the glass of comparison example 1 in Table 2)" and for the other half, "glass 24 (the light transmissive substrate used in the greenhouse of the present invention (in this example, this will also is referred to as a light transmissive substrate)) of the example 1 in Table 2 was placed (replaced). The placement (replacement) of glass was implemented on July 1, 2004.

Ridges A-I for planting tomatoes were formed in the greenhouse 20. The greenhouses were classified into "common glass area" and "light transmissive substrate area". The boundary between "common glass area" and "light transmissive substrate area" was separated by a plastic curtain 26. For all tomato plants, all flower clusters which emerged after the glasses were placed (replaced) on July 1 were adjusted to have 5 flower buds per cluster (the other flower buds were removed). 304 tomato plants were in the common glass area and the light transmissive substrate area, respectively, and along with the growth and elongation of the tomato plants, the leading tips of the tomato plants were moved sideways. At the time point (late August) when the fruits of the flower clusters which emerged after July 1 when the glasses were placed were fully ripened, 10 individual tomato plants having its front tip at the center of each area were subjected to investigation (designated by reference numerals 30 and 32 in the figure), and investigation was carried out on each individual plant.

For each tomato plant subjected to investigation, the fruits were harvested from 3 layers of flower clusters at the time point when they were fully ripened, and investigated. The number of fruits per flower cluster, the weight per fruit, and whether there was damage (defect factor) to the fruit were investigated. Also, in order to investigate the heat ray cutoff effect of the glass of the example 1, a fully ripened tomato fruit was placed with the stem end facing down outdoors at 20 cm below the glass of the comparison example 1 or the glass of the example 1, and the surface temperature of the side of the fruit facing up was measured one hour later. The results are shown in Table 4.

## Table 4

| | | | Testing Results | | | Influence on the tomatoes |
|---|---|---|---|---|---|---|
| | | | Glass of Comparison Example 1 | Glass of Example 1 | | |
| Number of flowers | | | 5 | 5 | | *Flower buds were picked to make it 5 flowers/cluster. |
| Fruit-setting rate | | | 60% | 90% | | Optimum temperature for pollen germination is 25 °C (limits are 20~30 °C). At over 30 °C, there was fruit-setting loss due to pollination defects. |
| Number of fruits | | | 3.0 | 4.5 | Fruits/flower cluster | There was loss of the number of fruits due to decrease of fruit-setting rate. |
| Fruit size | | | 100 - 120 | 90 - 110 | g | No influence only by room temperature (high temperature). Due to decrease in number of fruits, the weight per fruit increased slightly |
| Growth rate | | | 1.1 | 1.1 | Flower clusters/week | The higher the temperature, the faster the growth rate. Heat insulating glass had only a small influence of about 1 °C on the room temperature, so it was assumed to have no influence on the growth speed. |
| Quality of the fruits | Non-defective | Yield | 50 % - 60 % | 70 % - 85 % | | Scorch, discoloration, bottom rot, and deformation were causes of defects. |
| | Defective | Scorched fruit, discolored fruit | 10-30 % | 5-10 % | | High room temperature and direct rays caused the fruit surface temperature to rise. The formation of lycopene which accounts for the red color of the fruit is inhibited causing discoloration. The optimum temperature is 19-24 °C (limits are 10-33 °C). Mild cases are called "discolored fruit", and severe ones are called "scorched fruit". |
| | | Bottom rot | 10-20 % | 5-10 % | | High room temperature and direct rays caused the water absorption of the plant body to increase. This caused stress to the plant body, causing bottom rot. |
| | | Deformed fruit | 5 - 10 % | less than 5 % | | Pollination defect due to high temperature inhibited the growth inside the fruit. This appeared as irregularities of the fruit surface. |
| | | Others | 5 - 10 % | 5 - 10 % | | No influence on blemishes, fruitlets, and fruit cracking. |
| Surface temperature of fruit (direct rays) | | | 35-45 | 25-35 | °C | *Measured outdoors, not in the greenhouse. |
| Non-defective crop yield (conversion) | | Number of fruits | 3.0 | 4.5 | Non-defective yield per flower cluster | Non-defective product yield per 10 are |
| | | Fruit size (g) | 100-120 | 90-110 | | |
| | | Non-defective product rate | 50 % - 60 % | 70 % - 85 % | | |
| | | 3 layers of flower cluster | 3 | 3 | | |
| | | Planting density (plants/10 are) | 2500 | 2500 | | |
| | | Non-defective crop yield (calculated value) | 1.13-1.62 | 2.13-3.16 | t/10a/3 layers of flower cluster | The number of fruits decreased at high temperature, and non-defective product rate of the harvested plants decreased due to high temperature damage. |

EP 1 872 652 A1

Also, using the glass of the comparison example 1 and the glass of the example 1, the effect of the greenhouse of the present invention was examined through many factors including the growth of roots, growth point, leaves, activity of the bumblebees, pollen activity and the like. The results are shown in Table 5.

Table 5

| Glass of Comparision Example 1 | Glass of Example 1 | Influence of heat |
|---|---|---|
| Δ | Δ-○ | The optimum culture medium temperature of root growth is 23 ˚C, and root growth is inhibited when the temperature root medium rises. Growth stops at 37 ˚C. |
| ○=Sufficient amount of root color is healthy white | | |
| Δ=Amount of roots is slightly less, but root color is white | | |
| ×=Insufficient amount of roots, root color is brown (a decline in the ability to absorb nutrition and water | | |
| ×-Δ | ○ | The optimum temperature for tomato cultivation is 13-28 ˚C, and the limit for healthy growth is 10-30 ˚C. Direct rays caused temperature rise, and "scorch" sometimes caused growth to stop. The upper leaves receive direct rays, resulting in higher temperature. The lower leaves rays, resuming in higher temperature. The tower leaves were less influenced due to shading by the upper leaves. were less influenced due to shading by the upper leaves. |
| ○=Crowth point (sprout) is healthy green, no problem in growth | | |
| Δ=Slight withering and curling can be seen in the growth point (sprout), but no influence on the growth (the yield decreases due to loss in tomato activity when the symptoms are severe) | | |
| ×=Growth point brown, the growth stops (unable to continue cultivation) | | |
| ×-Δ | Δ-○ | |
| ○=No problems in leaf color, leaf size, and momentum of expansion | | |
| Δ=Leaves are small, and no momentum of expansion (withering) | | |
| =Leaves are small, and the edge of the leaves turned brown | | |
| ×-Δ | Δ-○ | Weak against heat. Best at lower than 30 ˚C (recommended by bee maker) |
| ○=Moving (visiting flowers) actively all day | | |
| Δ=Moving (visiting flowers) only during the cool periods (for example, morning) of the day | | |
| ×=No activity (visiting flowers) at all | | |
| ×-Δ | ○ | The optimum temperature for pollen germination is 25 ˚ C (the limit is 20-30 ˚C). At 30 ˚C or higher, pollination defect causes fruit-setting defects |
| ○=Pollen germinates without a problem. Almost all flowers open and bear fruit | | |
| Δ=Pollen germinates almost without problem, but there are some flowers that don't open, and some that don't bear fruit | | |
| ×=Pollen doesn't germinate. Most flowers don't open, and don't bear fruit even when they do. | | |

Example 2

Next, the relationship between the surface condition of the glass and the dropping of the water droplets was investigated. Glass is often used as the roof light on the roofs of large bathhouse, hot spring facilities, and plant greenhouses. Under high temperature environments, the water that condenses on the inside surface of the roof grows gradually and escapes from the glass as a large water droplet. At that point, depending on the hydrophilicity and condition of the inside surface of the glass, water droplets may spread like a sheet and not fall from the glass surface, or may form a spherical droplet and fall vertically at the place of condensation. This is also related to the slope of the roof. That is, if the slope of the roof is steep, spherical droplets will not fall at the place of condensation and will travel on the inside surface to reach the glass edge.

When this kind of condensation occurs in a plant greenhouse, the water drops that fall vertically from the place of condensation hit the leaves of plants, causing disease in many cases. For this reason, the change of critical angle for vertical fall depending on the surface condition of glass (wettability, contact angle) was examined and the appropriate contact angle of glass was considered.

Specifically, each of the glasses prepared for the example 1, comparison example 1, and comparison example 2 were held with the film surface facing downward at a slope of 22˚, water drops were introduced from below using a spray, and the trickling of the water drops were observed. As a result, on the glass of the example 1 and comparison example 2, the water droplets spread on the surface; the water traveled on the glass surface to the edge, and did not fall as water droplets, while many water droplets fell when using the glass of the comparison example 1.
Moreover, the result of the measurement of mean surface roughness (Ra) of these glasses were 50 nm for the glass of the example 1, 0.1 nm for the glass of the comparison example 1, and 60 nm for the glass of the comparison example 2.

Example 3

Next, using various light transmissive substrates prepared as mentioned above, energy load calculation results were investigated. As for the energy load calculations, the winter heating-load calculations for December to March were carried out using SMASH (Institute for Building Environment and Energy Conservation).

<Calculation conditions>

1. Calculation model dimensions (rectangular parallelepiped model)

SMASH is a heating-load calculation program for residential houses, and cannot calculate directly for large-scale structures. Therefore, in order to assume a greenhouse of the following dimensions and calculate for it, the method of estimating a 1/1 model from calculations implemented on a 1/10 model was used to calculate heating load of the glass greenhouse (the glasses of the example 1, comparison example 1, or comparison example 2 were used for the entire surface of the curtain walls and the roof) of the following dimensions. That is, the results of the heating-load calculations of the 1/10 model, 1/8 model, and 1/6 model which can be calculated using SMASH were used and the heating load of the 1/1 model was estimated using a mathematical procedure (extrapolation). Specifically, the heating load of the 1/1 model was considered to be about 99.73 times that of the heating-load calculation result o the 1/10 model.

2. Other conditions

The number of times of natural ventilation: 0.6 times per hour
Room temperature condition: 16 ˚C all day
Floor: defined as a dirt floor
City setting: Kada, Wakayama-shi, Wakayama, Japan
Calculation target period: December 1 to March 31
The heating loads of the greenhouses when using each of the glasses are shown in Table 6, setting the heating load of the greenhouse using the glass of comparison example 1 at 100.
Table 6

|  | Heating load |
|---|---|
| Example 1 | 66 |
| Comparison Example 1 | 100 |
| Comparison Example 2 | 66 |

INDUSTRIAL APPLICABILITY

By utilizing the greenhouse using the light transmissive substrate of the present invention instead of the greenhouses utilized heretofore using plastic sheets or glass substrates, air-conditioning costs can be cut down drastically. Also, the yield of the plants being cultivated can be made to be the same as or better than the greenhouses utilized heretofore. The replacement of the glass substrate is relatively easy, and when using glass, the durability is also improved compared to plastic sheet.

**Claims**

1. A greenhouse wherein a light transmissive substrate with a visible light transmittance of 86% or more and solar radiation transmittance of 78% or less is used.

2. A greenhouse according to claim 1, wherein the coefficient of heat transmission of the light transmissive substrate is 4W/m$^2$K.

3. A greenhouse according to claim 1 or 2, the light transmissive substrate comprises a single pane.

4. A greenhouse according to claim 3, wherein the single pane is made of a substrate, a transparent conducting film on the substrate, and a first low-refractive index film on the transparent conducting film having a lower refractive index than that of the transparent conducting film.

5. A greenhouse according to claim 4, wherein the material of the transparent conducting film is selected from the group consisting of tin oxide, indium oxide, tin-doped indium oxide (ITO), zinc-doped indium oxide (IZO), and zinc oxide.

6. A greenhouse according to claim 4 or 5, wherein the material of the first low-refractive index film is silicon oxide or magnesium fluoride.

7. A greenhouse according to any one of claims 4 - 6, wherein a second low-refractive index film having a refractive index in-between the refractive indexes of the substrate and the transparent conducting film is provided between the substrate and the transparent conducting film.

8. A greenhouse according to any one of claims 4-6, wherein a high-refractive index film and a third low-refractive index film in this order from the side of the substrate is provided between the substrate and the transparent conducting film, the high-refractive index film having a higher refractive index than that of the third low-refractive index film and the third low-refractive index film having a lower refractive index than that of the transparent conducting film.

9. A greenhouse according to any one of claims 4-8, wherein the mean surface roughness (Ra) of irregularities of the film-side outermost surface of the single pane is in the range of 5 nm-100 nm.

10. A cultivating method for cultivating plants using a greenhouse according to any one of claims 1-9.

11. A cultivating method according to claim 10, wherein the plants are fruit vegetables.

12. A cultivating method according to claim 11, wherein the fruit vegetables are tomatoes.

13. A light transmissive substrate used for a covering material of greenhouses, wherein the light transmissive substrate having a visible light transmittance of 86% or more, a solar radiation transmittance of 78% or less, and a coefficient of heat transmission of 4W/m$^2$K or less.

## FIG. 1

# FIG. 2

## FIG. 3

## FIG. 4

# FIG. 5A

SOLAR RADIATION

20

SOUTHEAST

COMMON GLASS AREA

LIGHT TRANSMISSIVE SUBSTRATE AREA

NORTHWEST

1.4m

3.5m

22

26

24

RIDGE A    RIDGE B    RIDGE C    RIDGE D    RIDGE E    RIDGE F    RIDGE G    RIDGE H    RIDGE I

30

32

12.8m

EP 1 872 652 A1

*FIG. 5B*

EP 1 872 652 A1

## INTERNATIONAL SEARCH REPORT

| International application No. |
| --- |
| PCT/JP2006/304926 |

A. CLASSIFICATION OF SUBJECT MATTER
*A01G13/02*(2006.01), *A01G9/14*(2006.01), *B32B9/00*(2006.01), *C03C17/34*(2006.01)

According to International Patent Classification (IPC) or to both national classification and IPC

B. FIELDS SEARCHED

Minimum documentation searched (classification system followed by classification symbols)
A01G13/02, A01G9/14, B32B9/00, C03C17/34

Documentation searched other than minimum documentation to the extent that such documents are included in the fields searched
Jitsuyo Shinan Koho            1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2001-199744 A  (Nippon Sheet Glass Co., Ltd.), 24 July, 2001 (24.07.01), Full text; all drawings & US 6447921 B1        & EP 1038849 A1 & DE 60002934 D | 1-13 |
| A | JP 2000-281387 A  (Nippon Sheet Glass Co., Ltd.), 10 October, 2000 (10.10.00), Full text; all drawings (Family: none) | 1-13 |
| A | JP 7-10609 A  (Central Glass Co., Ltd.), 13 January, 1995 (13.01.95), Full text; all drawings (Family: none) | 1-13 |

☐  Further documents are listed in the continuation of Box C.          ☐  See patent family annex.

| | |
| --- | --- |
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    29 May, 2006 (29.05.06) | Date of mailing of the international search report<br>    06 June, 2006 (06.06.06) |
| --- | --- |
| Name and mailing address of the ISA/<br>    Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001128566 A

**Non-patent literature cited in the description**

- **YUJI YAMAMOTO ; KANICHI KAMIYA ; SUMIO SAKKA.** *Journal of the Ceramic Society of Japan,* 1982, vol. 90, 328-333